# EUROPÄISCHE PATENTSCHRIFT

(11) **EP 2 741 950 B1**
(45) Veröffentlichungstag und Bekanntmachung des Hinweises auf die Patenterteilung: **09.03.2016**
(21) Anmeldenummer: 12745431.2
(22) Anmeldetag: 16.07.2012
(51) Int. Cl.: B62D 15/02

(54) **VERFAHREN UND VORRICHTUNG ZUR UNTERSTÜTZUNG EINES FAHRERS EINES KRAFTFAHRZEUGS BEI EINEM FAHRMANÖVER**
METHOD AND DEVICE FOR SUPPORTING A DRIVER OF A MOTOR VEHICLE DURING A DRIVING MANEUVER
PROCÉDÉ ET DISPOSITIF D'AIDE À LA CONDUITE D'UN VÉHICULE AUTOMOBILE LORS D'UNE MAN UVRE DE CONDUITE

(30) Priorität: 12.08.2011 DE 102011080930
(43) Veröffentlichungstag der Anmeldung: 18.06.2014
(73) Patentinhaber: Robert Bosch GmbH, 70442 Stuttgart (DE)
(72) Erfinder: NIEMZ, Volker, 71277 Rutesheim (DE)
(86) Internationale Anmeldenummer: PCT/EP2012/063917
(87) Internationale Veröffentlichungsnummer: WO 2013/023854

(56) Entgegenhaltungen:
- EP-A1- 2 234 085
- DE-A1-102007 055 389
- DE-A1-102009 027 650
- JP-A- 2002 120 677
- US-A1- 2011 063 131

## Beschreibung

### Stand der Technik

Die Erfindung geht aus von einem Verfahren zur Unterstützung eines Fahrers eines Kraftfahrzeugs bei einem Fahrmanöver gemäß dem Oberbegriff des Anspruchs 1. Weiterhin betrifft die Erfindung eine Vorrichtung zur Durchführung des Verfahrens.

Zur Unterstützung eines Fahrers eines Kraftfahrzeugs bei einem Fahrmanöver existieren bereits viele unterschiedliche Fahrassistenzsysteme, insbesondere solche, die den Fahrer beim Einparken bzw. Ausparken aus einer Parklücke unterstützen. Hierbei wird mit Hilfe von Abstandssensoren am Fahrzeug der Abstand zu Objekten in der Umgebung des Kraftfahrzeugs gemessen. Die Sensoren befinden sich dabei üblicherweise im Frontbereich und im Heckbereich des Kraftfahrzeugs.

Insbesondere beim Einparken in Querparklücken, ist es notwendig, während des aktiven Einparkens die Umgebung seitlich neben dem Kraftfahrzeug wiederholt zu vermessen, um zum Beispiel Szenen wie Fahrzeug-Lücke-Säule-Fahrzeug und ähnliche erkennen zu können.

Hierzu sind bei derzeit bekannten Systemen im Heckbereich zwei zusätzliche Sensoren mit einer Blickrichtung, die im Wesentlichen quer zur Fahrtrichtung ausgerichtet ist, vorgesehen.

Weiterhin sind auch Systeme bekannt, die Ultraschallsensoren zur Umfelderfassung einsetzen und bei denen detektierte Objekte im Nahfeld in eine Karte eingetragen werden, um den Fahrer beim Navigieren zu unterstützen. Hierdurch kann zum Beispiel eine Säule, die mit den Front- oder Hecksensoren erfasst worden ist, und beim Passieren während des Fahrmanövers ein Hindernis darstellen könnte, gesehen werden, da die ursprüngliche Position der erfassten Säule während der kompletten Fahrzeugbewegung gespeichert bleibt. Befinden sich erfasste Objekte, die in der Karte eingetragen sind, im Fahrschlauch des Fahrzeugs, kann der Fahrer entsprechend gewarnt werden.

Ein Verfahren zur Erfassung der Umgebung bei einem Fahrmanöver, bei dem die Umgebung erfasst wird und eine Umfeldkarte erstellt wird, ist zum Beispiel in DE-A 10 2009 024 062 oder auch in DE-A 10 2008 001 648 beschrieben. Hierbei wird die Umgebungskarte jeweils derart gespeichert, dass Objekte in der Umgebung des Fahrzeugs auch dann weiterverfolgt werden können, wenn diese aus dem Sichtbereich der Sensoren verschwinden.

Aus JP 2002 120677 A ist ein Einparkhilfesystem bekannt, bei dem mittels entsprechender Sensoren in kurzen zeitlichen Abständen Abstände zu einem Objekt aufgenommen werden. Eine Objektkante wird durch eine gerade Linie approximiert und eine Einparkbahn derart berechnet, dass keine Kollision mit einer Objektkante stattfindet.

Nachteil der bekannten Verfahren ist jedoch, dass zum Erstellen der Umgebungskarte zunächst die Umgebung des Fahrzeugs erfasst werden muss. Insbesondere bei Ausparkmanövern aus einer Parklücke ist dies jedoch zunächst nicht möglich. Die Umfeldkarte kann erst während des Ausparkvorganges erstellt werden. Hierbei besteht jedoch die Gefahr, dass zum Beispiel aufgrund einer gefahrenen Kurve beim Ausparken ein Objekt seitlich neben dem Fahrzeug nicht erkannt wird. Auch ist es wenig hilfreich, die Umgebungskarte des Einparkens zu nutzen, da sich insbesondere durch wechselnde Belegung benachbarter Parkplätze die Umgebung während des Parkens des Kraftfahrzeugs ändern kann.

Das Dokument JP 2002 120677 A ist als nächstliegender Stand der Technik nach dem Oberbegriff des Anspruchs 1 zu sehen.

### Offenbarung der Erfindung

### Vorteile der Erfindung

Beim erfindungsgemäßen Verfahren zur Unterstützung eines Fahrers eines Kraftfahrzeugs bei einem Fahrmanöver wird die Umgebung seitlich neben dem Kraftfahrzeug mit einem ersten Sensor im Heckbereich und einem zweiten Sensor im Frontbereich erfasst. Anhand während einer kurzen Fahrtstrecke nacheinander aufgenommenen Abstandswerten des ersten Sensors zu einem Objekt wird eine Objektkante bestimmt und ein Kontaktpunkt festgelegt, der sich an der Stelle befindet, an der sich eine die Objektkante verlängernde Gerade und eine den Erfassungsbereich des zweiten, das Objekt nicht erfassenden Sensors auf der dem ersten Sensor zuweisenden Seite begrenzende Gerade schneiden.

Durch das erfindungsgemäße Verfahren ist es möglich, bereits nach einer kurzen Fahrstrecke, zum Beispiel beim Ausparken aus einer Parklücke, eine Warnung auszugeben, wenn das Fahrzeug sich dem berechneten Kontaktpunkt annähert. Da sich der Kontaktpunkt außerhalb eines Objekts neben dem Fahrzeug befindet, wird auf diese Weise auch sicher eine Kollision mit dem Objekt vermieden.

In einer ersten Ausführungsform der Erfindung wird zur Durchführung des Fahrmanövers eine Trajektorie berechnet, entlang der das Kraftfahrzeug bewegt wird, wobei die Trajektorie so bestimmt wird, dass das Kraftfahrzeug den festgelegten Kontaktpunkt nicht berührt. Die Berechnung der Trajektorie erlaubt es, ein Fahrmanöver automatisch oder semi-automatisch durchzuführen. Die Berechnung der Trajektorie unter Berücksichtigung des festgelegten Kontaktpunkts sichert weiterhin, dass das Fahrmanöver durchgeführt werden kann, ohne dass eine Gefährdungssituation, zum Beispiel eine Kollision mit einem dem Fahrzeug benachbarten Objekt, auftritt.

Als automatisches Fahrmanöver wird im Zusammenhang mit dieser Erfindung ein Fahrmanöver verstanden, bei dem sowohl die Längsführung als auch die Querführung des Fahrzeugs, das heißt Bremsen, Geschwindigkeit halten und Beschleunigen des Fahrzeugs und das Lenken des Fahrzeugs automatisch durchgeführt werden. Dem Fahrer obliegt in diesem Fall lediglich eine überwachende Funktion. Bei einem semi-automatischen Fahrmanöver ist es zum einen möglich, dass beispielsweise die Längsführung des Fahrzeugs automatisch erfolgt und dem Fahrer Hinweise zu notwendigen Lenkbewegungen gegeben werden, damit dieser einer berechneten Trajektorie folgen kann. Alternativ ist es auch möglich, dass die Lenkbewegungen automatisiert durchgeführt werden und dem Fahrer die Längsführung des Fahrzeuges obliegt. In einer weiteren Ausgestaltung eines semi-automatischen Fahrmanövers erhält der Fahrer Hinweise zu notwendigen Lenkbewegungen, um der berechneten Trajektorie zu folgen und sowohl Längsbewegung als auch Lenkbewegungen werden vom Fahrer des Kraftfahrzeugs durchgeführt.

In einer bevorzugten Ausführungsform der Erfindung wird bei der Durchführung des Fahrmanövers eine Abstandswarnung ausgegeben, wenn sich das Kraftfahrzeug während des Fahrmanövers dem festgelegten Kontaktpunkt nähert. Hierbei ist es unabhängig davon, ob das Fahrmanöver automatisch oder semi-automatisch durchgeführt wird oder ob der Fahrer selbsttätig das Fahrmanöver durchführt. Aufgrund der dem Fahrer gegebenen Warnung, dass sich das Kraftfahrzeug dem festgelegten Kontaktpunkt nähert, kann der Fahrer Maßnahmen ergreifen, um eine Kollision mit einem Objekt zu verhindern. So kann dieser zum Beispiel rechtzeitig das Fahrzeug anhalten oder die Bewegungsrichtung des Fahrzeuges ändern, um die Kollision zu vermeiden.

Die Ausgabe der Abstandswarnung kann zum Beispiel akustisch, optisch oder haptisch erfolgen. Auch sind Kombinationen der Ausgabearten möglich. So ist es zum Beispiel besonders bevorzugt, die Abstandswarnung akustisch und optisch auszugeben. Eine akustische Abstandswarnung kann zum Beispiel durch Senden eines Signaltons erfolgen. Hierbei ist es bevorzugt, dass die Frequenz, mit der der Signalton gesendet wird mit abnehmendem Abstand zum Kontaktpunkt zunimmt. Bei Unterschreiten eines vorgegebenen Abstandes zum Kontaktpunkt wird eine dauerhaftes Signal gesendet. Bei einer optischen Abstandswarnung ist es möglich, zum Beispiel Leuchtbalken vorzusehen, wobei mit abnehmendem Abstand zum Kontaktpunkt die Anzahl an aufleuchtenden Leuchtbalken zunimmt. Bei Unterschreiten eines vorgegebenen Abstandes ist es weiterhin möglich, zum Beispiel farblich geänderte Leuchtbalken, beispielsweise rote Leuchtbalken, vorzusehen. Auch ist es möglich, zum Beispiel eine zweidimensionale Darstellung des Fahrzeuges auf einem Ausgabegerät, beispielsweise einem Monitor eines Navigationssystems, vorzusehen. In diesem Fall kann die Lage des Objektes direkt in der Darstellung gezeigt werden. Hierdurch erhält der Fahrer einen zusätzlichen Hinweis auf den Ort des Objektes und kann somit gezielter notwendige Maßnahmen zur Vermeidung einer Kollision mit dem Objekt einleiten.

Um das Fahrmanöver möglichst direkt und mit möglichst wenig Fahrzügen ausführen zu können, ist es weiterhin vorteilhaft, wenn die den Erfassungsbereich des zweiten das Objekt nicht erfassenden Sensors auf der dem ersten Sensor zuweisenden Seite begrenzende Gerade die Gerade ist, die den Erfassungsbereich bei der Messung begrenzt, die mit dem kleinsten Abstand zu dem Objekt durchgeführt wird. Bei einer Fahrt aus einer Parklücke ist zum Beispiel die Messung, die mit dem kleinsten Abstand zum Objekt durchgeführt wird, die erste Messung, die mit dem Sensor durchgeführt wird. Im Gegensatz dazu ist bei einem Einparkvorgang die letzte Messung, die mit dem Sensor durchgeführt wird, die Messung, die mit dem kleinsten Abstand zum Objekt durchgeführt wird. Durch die Verwendung der Geraden zur Bestimmung des Kontaktpunktes, die den kleinsten Abstand zum Objekt aufweist, wird der Kontaktpunkt so festgelegt, dass der Abstand zwischen Kontaktpunkt und Objekt möglichst gering ist. Auf diese Weise kann eine Trajektorie gewählt werden, entlang der das Fahrzeug fährt, die möglichst nah an dem Objekt vorbeiführt. Hierdurch ist es zum Beispiel bei einem Ausparkvorgang möglich, aus der Parklücke auszuparken ohne auf die Gegenfahrbahn zu gelangen. Auch ist es hierdurch zum Beispiel bei einigen Fahrmanövern möglich, diese in einem Zug auszuführen, wo bei einem Kontaktpunkt, der sich weiter weg vom Objekt befände, mehrere Fahrzüge notwendig wären.

Von einem Ausparkmanöver als Fahrmanöver, das durchgeführt wird, kann zum Beispiel dann ausgegangen werden, wenn unmittelbar vor der Durchführung des Fahrmanövers der Motor des Fahrzeugs gestartet worden ist. Auf der anderen Seite ist von einem Einparkmanöver auszugehen, wenn der Motor des Kraftfahrzeugs schon eine längere Zeit gelaufen ist und sich das Kraftfahrzeug bewegt hat.

Neben einem Einparkmanöver oder einem Ausparkmanöver kann das Fahrmanöver auch ein beliebiges anderes Rangiermanöver sein. Weitere Rangiermanöver sind zum Beispiel Rangiermanöver in engen Straßen oder Gassen, bei denen beispielsweise eine enge Kurve befahren werden kann, die gegebenenfalls in einem Zug nicht zu bewältigen ist. Auch kann das Fahren in engen Straßen oder Gassen als Rangiermanöver gewertet werden, auch wenn die jeweiligen Fahrzüge in einem Zug durchgeführt werden können, jedoch nur wenig Platz zur Durchführung des Fahrmanövers zur Verfügung steht.

Eine Vorrichtung zur Durchführung des Verfahrens umfasst einen ersten Sensor im Heckbereich und einen zweiten Sensor im Frontbereich des Kraftfahrzeuges zur Erfassung der Umgebung seitlich neben dem Kraftfahrzeug sowie Mittel zur Bestimmung einer Objektkante aus mit dem ersten Sensor in aufeinanderfolgenden Messungen erfassten Abstandswerten und zur Festlegung eines Kontaktpunktes an der Stelle, an der sich eine die Objektkante verlängernde Gerade und eine den Erfassungsbereich des zweiten das Objekt nicht erfassenden Sensors auf der dem ersten Sensor zuweisenden Seite begrenzende Gerade schneiden.

Die Mittel zur Bestimmung der Objektkante aus mit dem ersten Sensor aufeinanderfolgende Messungen erfassten Abstandswerten und zur Festlegung des Kontaktpunktes umfassen zum Beispiel ein Steuergerät eines Fahrassistenzsystems. Hierbei ist zum Beispiel möglich, ein Steuergerät eines Einparkassistenzsystems zu nutzen. Das Steuergerät muss dabei Speichermittel aufweisen, mit denen jeweils die vorhergehenden Messungen gespeichert werden können, um aus den Messwerten die Objektkante zu bestimmen. Weiterhin ist es auch notwendig, insbesondere dann, wenn die erste Messung des zweiten Sensors genutzt wird, um die den Erfassungsbereich begrenzende Gerade zu bestimmen, dass diese entsprechenden Daten gespeichert werden. Mit einem Prozessor und geeigneter Software kann dann aus den mit den Sensoren erfassten Daten der Kontaktpunkt bestimmt werden.

Zur Erfassung der Umgebung werden üblicherweise Abstandssensoren eingesetzt. Hierbei können der erste Sensor im Heckbereich und der zweite Sensor im Frontbereich jeweils unabhängig voneinander ein Ultraschallsensor, ein Infrarotsensor, ein Radar-Sensor, ein Lidar-Sensor oder ein optischer Sensor sein. Bevorzugt ist es, wenn der Sensor im Frontbereich und der Sensor im Heckbereich gleichartig sind. Es können jedoch auch verschiedene Sensoren eingesetzt werden. Als optische Sensoren im Rahmen der vorliegenden Erfindung werden insbesondere videobasierte Sensorsysteme verstanden. Wenn ein solches videobasiertes Sensorsystem eingesetzt wird, so kann dieses zum Beispiel im Seitenspiegel des Kraftfahrzeugs untergebracht sein. Hierbei zählt der Seitenspiegel des Kraftfahrzeugs noch zum Frontbereich.

### Kurze Beschreibung der Zeichnungen

Ausführungsbeispiele der Erfindung sind in den Figuren dargestellt und werden in der nachfolgenden Beschreibung näher erläutert.

Es zeigen:
- Figur 1: eine schematische Darstellung des erfindungsgemäßen Verfahrens,
- Figur 2: ein Ausparkmanöver unter Berücksichtigung des festgelegten Kontaktpunktes,
- Figur 3: ein Ausparkmanöver, bei dem der festgelegte Kontaktpunkt nicht berücksichtigt wird.

### Ausführungsformen der Erfindung

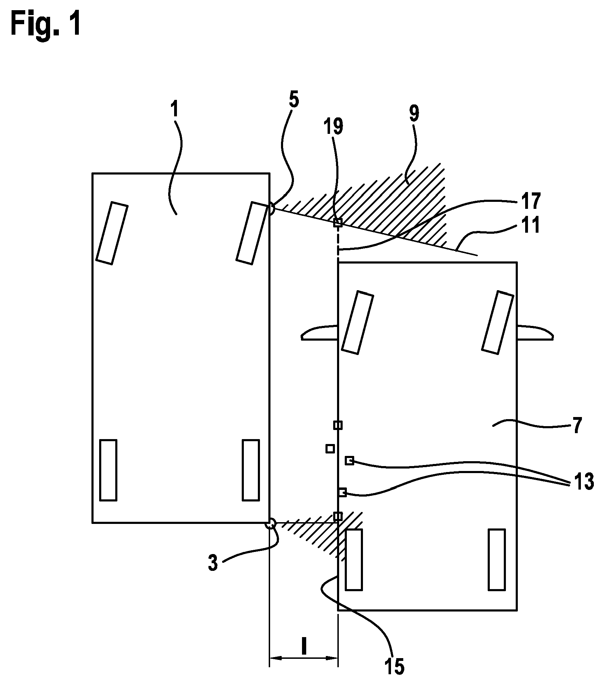

In Figur 1 ist schematisch das erfindungsgemäße Verfahren dargestellt.

Ein Kraftfahrzeug 1 mit dem ein Fahrmanöver ausgeführt wird, erfasst mit einem ersten Sensor 3 im Heckbereich und einem zweiten Sensor 5 im Frontbereich die seitliche Umgebung. Zusätzlich wird durch weitere Sensoren im Front- und im Heckbereich auch die Umgebung vor und hinter dem Fahrzeug erfasst. Dies ist in Figur 1 nicht dargestellt, da die Erfassung der Umgebung im Frontbereich und im Heckbereich für das erfindungsgemäße Verfahren zur Bestimmung des Kontaktpunkts nicht wesentlich ist.

Mit dem ersten Sensor 3 im Heckbereich des Kraftfahrzeugs 1 wird ein Objekt erfasst. Das Objekt ist in der hier dargestellten Ausführungsform ein parkendes Kraftfahrzeug 7. Bei einer Messung mit dem ersten Sensor 3 wird der Abstand I zwischen dem Kraftfahrzeug 1 und dem parkenden Kraftfahrzeug 7 gemessen.

Durch die versetzte Position des Kraftfahrzeugs 1 und des parkenden Kraftfahrzeugs 7 befindet sich das parkende Kraftfahrzeug 7 nicht im Erfassungsbereich 9 des zweiten Sensors 5. Eine den Erfassungsbereich 9 des zweiten Sensors 5 auf der dem parkenden Kraftfahrzeug 7 zugewandten Seite begrenzende Gerade 11 wird hinsichtlich ihrer Lage in einem Speicher des Fahrassistenzsystems, mit dem das erfindungsgemäß Verfahren durchgeführt wird, gespeichert.

Während des durchzuführenden Fahrmanövers bewegt sich das Kraftfahrzeug 1. Während der Bewegung des Kraftfahrzeugs werden mit dem ersten Sensor 3 und dem zweiten Sensor 5 weitere Messungen durchgeführt. Aufgrund der Positionen der Kraftfahrzeuge 1, 7 zueinander wird auch bei einer Vorwärtsbewegung des Kraftfahrzeugs 1 nur vom ersten Sensor 3 im Heckbereich des Kraftfahrzeugs 1 ein Signal empfangen. Dieses Signal stellt jeweils den gemessenen Abstand I zum parkenden Kraftfahrzeug 7 dar. Die Messung des Abstandes I an verschiedenen Positionen während der Fahrt des Fahrzeugs 1 ist beispielhaft in Figur 1 durch Messpunkte 13 dargestellt.

Aus der Lage der Messpunkte 13 wird eine Objektkante 15 des parkenden Kraftfahrzeugs 7 bestimmt. Die Objektkante 15 spiegelt dabei die Ausrichtung des parkenden Kraftfahrzeugs 7 wieder. Entlang der Objektkante 15 wird in einem nächsten Schritt eine Gerade 17 gebildet.

Aus dem Schnittpunkt der Geraden 17 entlang der Objektkante 15 und der den Erfassungsbereich 9 des zweiten Sensors 5 begrenzenden Gerade 11 wird ein Kontaktpunkt 19 festgelegt. Der Kontaktpunkt 19 wird erfindungsgemäß als vordere Begrenzung des parkenden Kraftfahrzeugs 7 angenommen.

Wenn sich nun der Fahrer des Kraftfahrzeugs 1 während des Fahrmanövers dem Kontaktpunkt 19 nähert, wird eine Warnung über die seitliche Annäherung an den Kontaktpunkt 19 ausgegeben. Hierdurch wird dem Fahrer die Möglichkeit gegeben, das Fahrmanöver so anzupassen, dass eine Kollision mit dem parkenden Kraftfahrzeug 7 vermieden wird.

Die Warnung, die an den Fahrer des Kraftfahrzeugs 1 ausgegeben wird kann optisch und/oder akustisch erfolgen. Auch eine haptische Warnung ist denkbar. Bevorzugt ist jedoch eine optische Warnung, gegebenenfalls in Verbindung mit einer akustischen Warnung.

Um den Fahrer optisch zu warnen, ist es zum einen möglich, zum Beispiel Lichtbalken vorzusehen, die mit abnehmendem Abstand zum Kontaktpunkt 19 länger werden. Alternativ ist es auch möglich, zum Beispiel LEDs vorzusehen, wobei mit abnehmendem Abstand zum Kontaktpunkt 19 eine zunehmende Anzahl an LEDs aufleuchtet. Bei Unterschreiten eines vorgegebenen Mindestabstandes kann zusätzlich die Farbe geändert werden, um dem Fahrer des Kraftfahrzeugs 1 eine zusätzliche Warnung zukommen zu lassen. Entsprechend wird üblicherweise bei einer akustischen Warnung ein sich wiederholendes Tonsignal gesendet, wobei mit abnehmendem Abstand zum Kontaktpunkt 19 die Frequenz der gesendeten Töne zunimmt. Bei Unterschreiten eines vorgegebenen Mindestabstands wird ein Dauerton gesendet, um dem Fahrer eine zusätzliche Warnung zukommen zu lassen.

Alternativ zu der vorstehend beschriebenen optischen Warnung mit Lichtbalken oder LEDs ist es auch möglich, zum Beispiel auf einer Anzeigevorrichtung, beispielsweise einem Monitor eines Navigationssystems oder einer beliebigen anderen Anzeigevorrichtung im Sichtbereich des Fahrers eine zweidimensionale Darstellung vorzusehen, bei der das Kraftfahrzeug 1 in Vogelperspektive gezeigt wird und weiterhin gemessene Objekte in der Umgebung des Kraftfahrzeugs. Hier kann auch der Kontaktpunkt 19 dargestellt werden und dem Fahrer so eine Annäherung an den Kontaktpunkt 19 gezeigt werden.

Zusätzlich oder alternativ zur Warnung des Fahrers bei einem vom Fahrer durchgeführten Fahrmanöver ist es auch möglich, das erfindungsgemäße Verfahren bei automatischen oder semi-automatischen Fahrmanövern einzusetzen. In diesem Fall wird eine Trajektorie, entlang der das Fahrmanöver durchgeführt werden soll, so berechnet, dass sich das Fahrzeug derart bewegt, dass ein Kontakt mit dem Kontaktpunkt 19 nicht erfolgt.

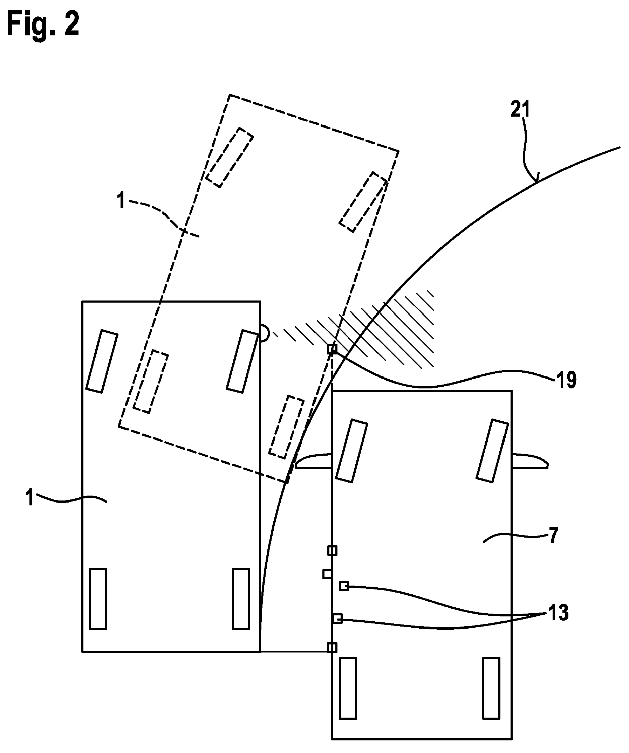

Eine Trajektorie für ein Ausparkmanöver ist beispielhaft in Figur 2 dargestellt.

Das Kraftfahrzeug 1 bewegt sich mit seiner hinteren rechten Ecke entlang einer Trajektorie 21, um aus einer Parklücke auszuparken. Die Parklücke ist dabei von dem parkenden Kraftfahrzeug 7 begrenzt. Zunächst wird, wie in Figur 1 dargestellt der Kontaktpunkt 19 berechnet. Anhand des Kontaktpunktes 19 wird dann die Trajektorie 21 bestimmt, entlang der das Fahrzeug bewegt werden kann, ohne dass eine Kollision mit dem parkenden Kraftfahrzeug 7 droht. Da bekannt ist, dass der Kontaktpunkt 19 außerhalb des parkenden Kraftfahrzeugs 7 ist, da sich der Kontaktpunkt 19 auf der den Erfassungsbereich des zweiten Sensors 5 begrenzenden Gerade befindet und mit dem zweiten Sensor 5 kein Objekt detektiert worden ist, ist es möglich, dass die Trajektorie 21 durch den Kontaktpunkt 19 geführt wird. Mehr bevorzugt ist es jedoch, die Trajektorie um den Kontaktpunkt 19 herumzuführen.

Die Berechnung der Trajektorie 21 derart, dass diese um den Kontaktpunkt 19 herumgeführt wird, ist insbesondere dann bevorzugt, wenn dem Fahrer noch Aufgaben, beispielsweise das Lenken des Fahrzeuges obliegen, das heißt ein semi-automatisches Fahrmanöver durchgeführt wird.

In Figur 1 gestrichelt dargestellt ist die Position des Kraftfahrzeugs während der Durchführung des Fahrmanövers, in der sich das Kraftfahrzeug in seiner nächsten Position zum Kontaktpunkt 19 und damit zum parkenden Kraftfahrzeug 7 befindet. Die Bewegung des Kraftfahrzeugs 1 läuft dabei so, dass keine Kollision mit dem parkenden Kraftfahrzeug 7 erfolgt und das Kraftfahrzeug 1 somit gefahrlos aus der Parklücke ausgeparkt werden kann.

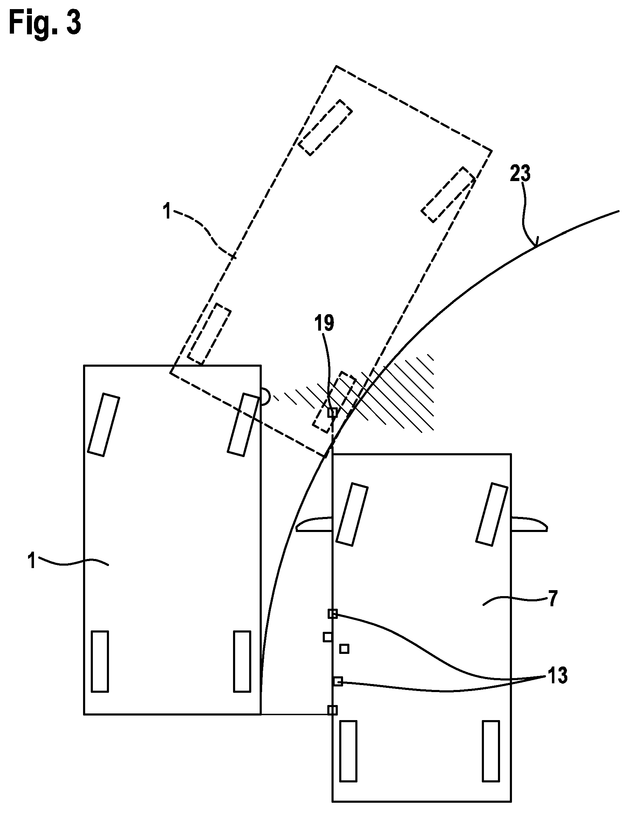

Im Unterschied dazu ist in Figur 3 der Verlauf einer Trajektorie 23 gezeigt, die zu einem Zusammenstoß mit dem parkenden Kraftfahrzeug 7 führt.

In der in Figur 3 dargestellten Ausführungsform führt die Trajektorie 23 der hinteren rechten Ecke des Kraftfahrzeugs 1 nicht durch oder um den Kontaktpunkt 19 sondern am Kontaktpunkt 19 auf der dem parkenden Kraftfahrzeug 7 zugewandten Seite vorbei. Dies führt dazu, dass das Kraftfahrzeug 1 in einem zu engen Bogen um das parkende Kraftfahrzeug 7 herumgeführt wird und an der Stelle, an der die Trajektorie 23 am dichtesten am parkenden Kraftfahrzeug 7 vorbeiläuft, es zu einer Kollision kommt.

Durch die Bestimmung des Kontaktpunktes 19 und dessen Berücksichtigung lassen sich solche Kollisionen, wie sie in Figur 3 dargestellt sind, vermeiden. Es wird ein sicheres Ausparken ohne die Gefahr einer Schädigung von dem Kraftfahrzeug umliegenden Objekten und damit natürlich auch ohne Beschädigung des eigenen Kraftfahrzeuges 1 ermöglicht.

## Patentansprüche

1. Verfahren zur Unterstützung eines Fahrers eines Kraftfahrzeugs (1) bei einem Fahrmanöver, bei dem die Umgebung seitlich neben dem Kraftfahrzeug (1) mit einem ersten Sensor (3) im Heckbereich und einem zweiten Sensor (5) im Frontbereich erfasst wird, **dadurch gekennzeichnet, dass** anhand während einer kurzen Fahrstrecke nacheinander aufgenommener Abstandswerte (13) des ersten Sensors (3) zu einem Objekt (7) eine Objektkante (15) bestimmt wird und ein Kontaktpunkt (19) festgelegt wird, der sich an der Stelle befindet, an der sich eine die Objektkante (15) verlängernde Gerade (17) und eine den Erfassungsbereich (9) des zweiten das Objekt (7) nicht erfassenden Sensors (5) auf der dem ersten Sensor (3) zuweisenden Seite begrenzende Gerade (11) schneiden.

2. Verfahren gemäß Anspruch 1, **dadurch gekennzeichnet, dass** zur Durchführung des Fahrmanövers eine Trajektorie (21) berechnet wird, entlang der das Kraftfahrzeug (1) bewegt wird, wobei die Trajektorie (21) so bestimmt wird, dass das Kraftfahrzeug (1) den festgelegten Kontaktpunkt (19) nicht berührt.

3. Verfahren gemäß Anspruch 1 oder 2, **dadurch gekennzeichnet, dass** bei der Durchführung eines Fahrmanövers eine Abstandswarnung ausgegeben wird, wenn sich das Kraftfahrzeug (1) während des Fahrmanövers dem festgelegten Kontaktpunkt (19) nähert.

4. Verfahren gemäß einem der Ansprüche 1 bis 3, **dadurch gekennzeichnet, dass** die den Erfassungsbereich des zweiten das Objekt (7) nicht erfassenden Sensors (5) auf der dem ersten Sensor (3) zuweisenden Seite begrenzende Gerade (11) die Gerade ist, die den Erfassungsbereich bei der Messung begrenzt, die mit dem kleinsten Abstand zu dem Objekt durchgeführt wird.

5. Verfahren gemäß einem der Ansprüche 1 bis 4, **dadurch gekennzeichnet, dass** das Fahrmanöver ein Einparkmanöver, ein Ausparkmanöver oder ein Rangiermanöver ist.

6. Vorrichtung zur Durchführung des Verfahrens gemäß einem der Ansprüche 1 bis 5, umfassend einen ersten Sensor (3) im Heckbereich und einen zweiten Sensor (5) im Frontbereich eines Kraftfahrzeugs (1) zur Erfassung der Umgebung seitlich neben dem Kraftfahrzeug (1), **gekennzeichnet durch** Mittel zur Bestimmung einer Objektkante (15) aus mit dem ersten Sensor (3) in aufeinanderfolgenden Messungen erfassten Abstandswerten (13) und zur Festlegung eines Kontaktpunktes (19) an der Stelle, an der sich eine die Objektkante (15) verlängernde Gerade (17) und eine den Erfassungsbereich des zweiten das Objekt (7) nicht erfassenden Sensors (5) auf der dem ersten Sensor (3) zuweisenden Seite begrenzende Gerade (11) schneiden.

7. Vorrichtung gemäß Anspruch 6, **dadurch gekennzeichnet, dass** die Mittel zur Bestimmung der Objektkante (15) aus mit dem ersten Sensor (3) in aufeinanderfolgenden Messungen erfassten Abstandswerten (13) und zur Festlegung des Kontaktpunktes ein Steuergerät eines Fahrassistenzsystems umfassen.

8. Vorrichtung gemäß Anspruch 7, **dadurch gekennzeichnet, dass** der erste Sensor (3) im Heckbereich und der zweite Sensor (5) im Frontbereich jeweils unabhängig voneinander ein Ultraschallsensor, ein Infrarotsensor, ein Radar-Sensor, ein Lidar-Sensor oder ein optischer Sensor sind.

## Claims

1. Method for assisting a driver of a motor vehicle (1) during a driving manoeuvre, in which the environment to the side of the motor vehicle (1) is sensed using a first sensor (3) in the rear area and a second sensor (5) in the front area, **characterized in that** an object edge (15) is determined using distance values (13) from the first sensor (3) to an object (7) which are recorded in succession over a short driving distance and a contact point (19) is stipulated, which contact point is at the location at which a straight line (17) extending the object edge (15) and a straight line (11) bounding the sensing range (9) of the second sensor (5), which does not sense the object (7), on the side facing the first sensor (3) intersect.

2. Method according to Claim 1, **characterized in that**, in order to carry out the driving manoeuvre, a trajectory (21) is calculated, along which the motor vehicle (1) is moved, the trajectory (21) being determined in such a manner that the motor vehicle (1) does not touch the stipulated contact point (19).

3. Method according to Claim 1 or 2, **characterized in that**, when carrying out a driving manoeuvre, a distance warning is output if the motor vehicle (1) approaches the stipulated contact point (19) during the driving manoeuvre.

4. Method according to one of Claims 1 to 3, **characterized in that** the straight line (11) bounding the sensing range of the second sensor (5), which does not sense the object (7), on the side facing the first sensor (3) is the straight line which bounds the sensing range during the measurement which is carried out at the shortest distance from the object.

5. Method according to one of Claims 1 to 4, **characterized in that** the driving manoeuvre is a manoeuvre for parking the vehicle in a parking space, a manoeuvre for removing a vehicle from a parking space or an aligning manoeuvre.

6. Apparatus for carrying out the method according to one of Claims 1 to 5, comprising a first sensor (3) in the rear area and a second sensor (5) in the front area of a motor vehicle (1) for sensing the environment to the side of the motor vehicle (1), **characterized by** means for determining an object edge (15) from distance values (13) sensed using the first sensor (3) in successive measurements and for stipulating a contact point (19) at the location at which a straight line (17) lengthening the object edge (15) and a straight line (11) bounding the sensing range of the second sensor (5), which does not sense the object (7), on the side facing the first sensor (3) intersect.

7. Apparatus according to Claim 6, **characterized in that** the means for determining the object edge (15) from distance values (13) sensed using the first sensor (3) in successive measurements and for stipulating the contact point comprise a control device of a driving assistance system.

8. Apparatus according to Claim 7, **characterized in that** the first sensor (3) in the rear area and the second sensor (5) in the front area are each independently an ultrasonic sensor, an infrared sensor, a radar sensor, a lidar sensor or an optical sensor.

## Revendications

1. Procédé d'aide à la conduite pour un conducteur d'un véhicule automobile (1) lors d'une manoeuvre de conduite, dans lequel l'environnement latéralement à côté du véhicule automobile (1) est détecté avec un premier capteur (3) dans la région arrière et avec un deuxième capteur (5) dans la région avant, **caractérisé en ce qu'**à l'aide de valeurs de distance (13) du premier capteur (3) à un objet (7), reçues successivement pendant une courte section de conduite, un bord de l'objet (15) est déterminé et un point de contact (19) est établi, lequel se trouve à l'endroit auquel s'intersectent une droite (17) prolongeant le bord de l'objet (15) et une droite (11) limitant la région de détection (9) du deuxième capteur (5) ne détectant pas l'objet (7) du côté tourné vers le premier capteur (3).

2. Procédé selon la revendication 1, **caractérisé en ce que** pour mettre en oeuvre la manoeuvre de conduite, une trajectoire (21) est calculée, le long de laquelle le véhicule automobile (1) est déplacé, la trajectoire (21) étant déterminée de telle sorte que le véhicule (1) ne vienne pas en contact avec le point de contact établi (19).

3. Procédé selon la revendication 1 ou 2, **caractérisé en ce que** lors de la mise en oeuvre d'une manoeuvre de conduite, un avertissement de distance est émis lorsque pendant la manoeuvre de conduite, le véhicule automobile (1) se rapproche du point de contact établi (19).

4. Procédé selon l'une quelconque des revendications 1 à 3, **caractérisé en ce que** la droite (11) limitant la région de détection du deuxième capteur (5) ne détectant pas l'objet (7) du côté tourné vers le premier capteur (3) est la droite qui limite la région de détection lors de la mesure effectuée avec la plus petite distance à l'objet.

5. Procédé selon l'une quelconque des revendications 1 à 4, **caractérisé en ce que** la manoeuvre de conduite est une manoeuvre d'entrée de place de stationnement, de sortie de place de stationnement ou une manoeuvre d'alignement.

6. Dispositif pour mettre en oeuvre le procédé selon l'une quelconque des revendications 1 à 5, comprenant un premier capteur (3) dans la région arrière et un deuxième capteur (5) dans la région avant d'un véhicule automobile (1) pour détecter l'environnement latéralement à côté du véhicule automobile (1), **caractérisé par** des moyens pour déterminer un bord de l'objet (15) à partir de valeurs de distance (13) détectées avec le premier capteur (3) par des mesures successives et pour établir un point de contact (19) à l'endroit auquel s'intersectent une droite (17) prolongeant le bord de l'objet (15) et une droite (11) limitant la région de détection du deuxième capteur (5) ne détectant pas l'objet (7) du côté tourné vers le premier capteur (3).

7. Dispositif selon la revendication 6, **caractérisé en ce que** les moyens pour déterminer un bord de l'objet (15) à partir de valeurs de distance (13) détectées par des mesures successives avec le premier capteur (3) et pour établir le point de contact comprennent un appareil de commande d'un système de conduite assistée.

8. Dispositif selon la revendication 7, **caractérisé en ce que** le premier capteur (3) dans la région arrière et le deuxième capteur (5) dans la région avant sont à chaque fois indépendamment l'un de l'autre un capteur à ultrasons, un capteur infrarouge, un capteur-radar, un capteur-lidar ou un capteur optique.
